# EUROPÄISCHE PATENTSCHRIFT

(11) **EP 2 583 919 B1**
(45) Veröffentlichungstag und Bekanntmachung des Hinweises auf die Patenterteilung: **02.04.2014**
(21) Anmeldenummer: 12191416.2
(22) Anmeldetag: 18.12.2008
(51) Int. Cl.: B65G 47/51, B65G 21/18

(54) **Vorrichtung zum Transportieren von Gegenständen**
Device for transporting objects
Dispositif de transport d'objets

(30) Priorität: 16.01.2008 DE 102008004775
(43) Veröffentlichungstag der Anmeldung: 24.04.2013
(62) Teilanmeldung aus: 08870805.2
(73) Patentinhaber: Krones AG, 93073 Neutraubling (DE)
(72) Erfinder: Seger, Martin, 92318 Neumarkt i. d. Opf. (DE); Hüttner, Johann, 84066 Mallersdorf-Pfaffenberg (DE); Halbo, Hansjörg, 93142 Maxhütte-Haidhof (DE)
(74) Vertreter: Grünecker, Kinkeldey, Stockmair & Schwanhäusser

(56) Entgegenhaltungen:
- DE-U1-202004 012 848
- US-A- 5 413 213
- US-A- 6 152 291

## Beschreibung

Die Erfindung bezieht sich auf eine Vorrichtung zum Transportieren von Gegenständen der im Oberbegriff von Anspruch 1 erläuterten Art.

Eine derartige Vorrichtung ist aus der DE 20 2004 012 848 U1 bekannt. Die bekannte Vorrichtung enthält einen ersten und einen zweiten Förderer, die horizontal, parallel zueinander und in unterschiedliche Richtungen laufen. Die Förderer sind als Bandförderer ausgebildet, und bestehen insbesondere aus über Scharniere miteinander verbundenen Unterstützungsplatten, auf denen Gegenstände, wie beispielsweise Flaschen aus Kunststoff oder dergleichen, leer oder gefüllt, einen sicheren Stand finden. Zwischen den beiden Förderern ist eine Transfereinrichtung angeordnet, die sich, angetrieben durch einen externen Fahrantrieb, entlang der Förderer und relativ zu ihnen bewegen kann und die dafür sorgt, dass Gegenstände zwischen dem ersten und dem zweiten Förderer ausgetauscht werden können. Zu diesem Zweck ist auf der Transfereinrichtung ein dritter Förderer und ein Förderantrieb für den dritten Förderer angeordnet, der in seiner konstruktiven Ausgestaltung identisch mit dem ersten und zweiten Förderer ist. Dieser dritte Förderer läuft auf der Transfereinrichtung endlos um und kommt wechselseitig mit dem ersten und dem zweiten Förderer in Übergabekontakt. Jeder Förderer läuft auf seiner eigenen Unterstützungsschiene, die dafür sorgt, dass die Förderer niveaugleich in der gleichen Ebene laufen können.

Aus der WO 2005/102880 ist eine Förder-/Speichereinrichtung mit einem ersten und einem zweiten Förderer bekannt, die zumindest bereichsweise parallel zueinander und im Abstand nebeneinander geführt sind. Die beiden Förderer sind wendelförmig als Förderturm oder spiralig in der Fläche angeordnet. Um Gegenstände zwischen den Förderern übergeben zu können, ist zwischen den Förderern ein Schlitten verfahrbar, auf dem eine Leiteinrichtung in Form einer Prall- und Leitfläche angeordnet ist. Die Leiteinrichtung ragt sowohl in den ersten als auch in den zweiten Förderer hinein, so dass die Artikel vom gegen die Leiteinrichtung fördernden Förderer auf den Förderer übergeschoben werden können, der sich von der Leiteinrichtung wegbewegt. Der Schlitten wird über den Antrieb der ersten und zweiten Förderer angetrieben und läuft auf einer Führung, die bevorzugt auch den Antrieb für den Schlitten, beispielsweise in Form eines Bandes oder einer Kette oder dgl. trägt. Die Führung ist mittig zwischen den beiden Förderern angeordnet.

Aus der EP 581 143 ist eine Fördereinrichtung bekannt, die insbesondere auf das Fördern von Zigaretten ausgelegt ist. Die Fördereinrichtung enthält einen Förderturm mit wendelförmig angeordneten ersten und zweiten Förderern, die in einem Ausführungsbeispiel vertikal übereinander angeordnet sind. Am Außenumfang der Fördermittel wird über einen Dreharm ein Bandwagen angetrieben geführt, der einerseits eine Umlenkstelle zwischen den beiden Förderern trägt und andererseits einen Entnahmeförderer aufweist, der aus zwei das Fördertrum des Förderers auf beiden Seiten tangierenden Förderbändern besteht. Die Bänder des Entnahmeförderers heben den vom Förderer geförderten Artikelstrom von dessen Fördertrum ab und bewegen ihn tangential zur Wendel zu einer als Vertikalförderstrecke ausgebildeten Umlenkzone und von dort auf einen Rückführförderer, der die umgelenkten Artikel auf den zweiten Förderer ablegt.

Es ist weiterhin bekannt, beispielsweise aus der WO 2005/073113, ein endloses Fördermittel, unterteilt in einen ersten (Fördertrum) und einen zweiten (Leertrum) Förderer parallel zueinander wendelförmig an- bzw. absteigend anzuordnen, so dass sich ein Förderturm ergibt. Fördertrum und Leertrum sind unabhängig voneinander antreibbar. Um hier die Möglichkeit zu haben, das Verhältnis der Aufnahmekapazitäten der Förderer zu verändern, sind bei der bekannten Vorrichtung die Umlenkpunkte der Förderer auf einem Schlitten angeordnet, der durch den Antrieb der beiden Trums derart verfahrbar ist, dass sich das Längenverhältnis zwischen dem Förder- und dem Leertrum verändert.

US 6,152,291 beschreibt eine gattungsgemäße Vorrichtung.

Der Erfindung liegt die Aufgabe zugrunde, eine konstruktiv einfache und zuverlässig wirksame Vorrichtung zum Transportieren von Gegenständen zu schaffen.

Die Aufgabe wird durch die im Anspruch 1 angegebenen Merkmale gelöst.

Die Transfereinrichtung ist mit einem eigenen (dritten) Förderer versehen, der unabhängig von den ersten und zweiten Förderern antreibbar ist, wobei bei nebeneinander liegenden, wendel- bzw. spiralförmig geführten Förderern, trotz des Unterschiedes des Krümmungsradius zwischen den beiden Förderern, auf konstruktiv einfache Weise eine Übergabe stattfinden kann.

Vorteilhafte Weiterbildungen sind den Unteransprüchen zu entnehmen.

Durch die Ausgestaltung der Unterstützungsschienen derart, dass sich zwei benachbarte Förderer, d.h. der dritte mit dem ersten bzw. der dritte mit dem zweiten Förderer, jeweils eine Unterstützungsschiene teilen, wird einerseits der bauliche Aufwand verringert, der anfällt, wenn zwei benachbarte Unterstützungsschienen niveaugleich zueinander ausgerichtet werden müssen, was im Falle von wendel- oder spiralförmig geführten Förderern besonders arbeitsaufwendig ist. Darüber hinaus ist der Verschleiß der gemeinsamen Unterstützungsschiene wesentlich besser zu überwachen, als dies bei Einzelschienen der Fall wäre, da die gemeinsamen Schienen zumindest auf der Seite der Transfereinrichtung außerhalb der Transfereinrichtung frei liegt und der Verschleiß dort gut beobachtet werden kann. Bevorzugt ist zumindest die Lauffläche der Unterstützungsschiene als Verschleißteil und reibungsvermindernd ausgebildet.

Es ist weiterhin ein Fahrantrieb für die Bewegung der Transfereinrichtung entlang der ersten und zweiten Förderer vorgesehen, der im bevorzugten Ausführungsbeispiel ebenfalls von der Transfereinrichtung getragen wird, so dass aufwändige Nachführungen von Antriebsmitteln entfallen können. Für einen derartigen Fahrantrieb eignet sich besonders ein Zahnradantrieb auf der Transfereinrichtung, der mit einer stationären Zahnleiste zusammenwirkt.

Die Transfereinrichtung kann jedoch auch durch einen stationären Fahrantrieb angetrieben werden, der bevorzugt einen an der Transfereinrichtung befestigten Mitnehmer bewegt.

Die Transfereinrichtung wird durch eine Abstützeinrichtung gehalten, die in einem bevorzugten Ausführungsbeispiel auf einer Lauffläche laufende Rollen enthält. Bei wendelförmigen Förderstrecken kann sich die Abstützeinrichtung kann in der gleichen Etage wie der dritte Förderer befinden. Insbesondere für dritte Förderer, die für eine hängende Förderung ausgebildet sind, ist es jedoch bevorzugt, Abstützung und Übergabe in unterschiedlichen Etagen vorzunehmen, da auf diese Weise eine hängende Förderung konstruktiv und verfahrenstechnisch wesentlich einfacher durchzuführen bzw. überhaupt erst möglich ist.

Ausführungsbeispiele der Erfindung werden nachfolgend anhand der Zeichnungen näher erläutert. Es zeigen:
- Fig. 1: eine perspektivische, schematische Darstellung einer erfindungsgemäßen Vorrichtung,
- Fig. 2: die Draufsicht auf Fig. 1,
- Fig. 3: ein vergrößerter Schnitt III-III aus Fig. 2,
- Fig. 4: eine herausvergrößerte Einzelheit am Übergang zwischen Transfereinrichtung und Förderer in einem ersten Ausführungsbeispiel,
- Fig. 5: einen Längsschnitt durch ein zweites Ausführungsbeispiel der Erfindung in schematisierter Darstellung,
- Fig. 6: eine Draufsicht auf ein weiteres Ausführungsbeispiel einer erfindungsgemäßen Vorrichtung in stark schematisierter Darstellung, und
- Fig. 7: den Schnitt VII-VII aus Fig. 6.

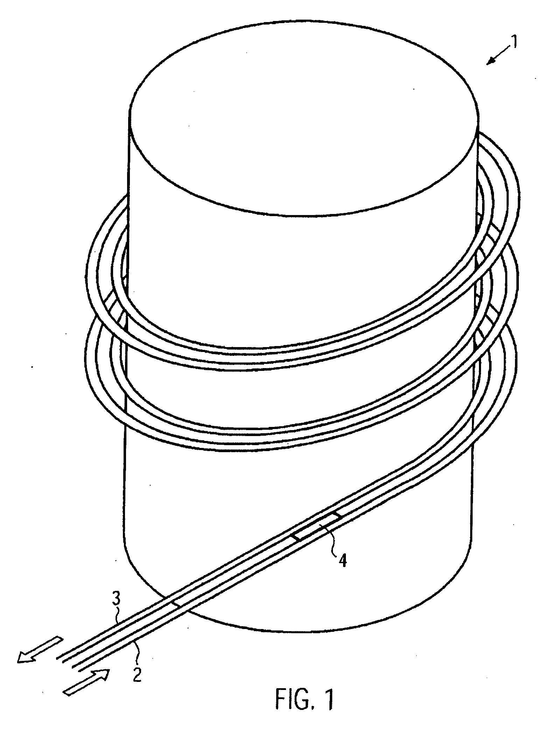

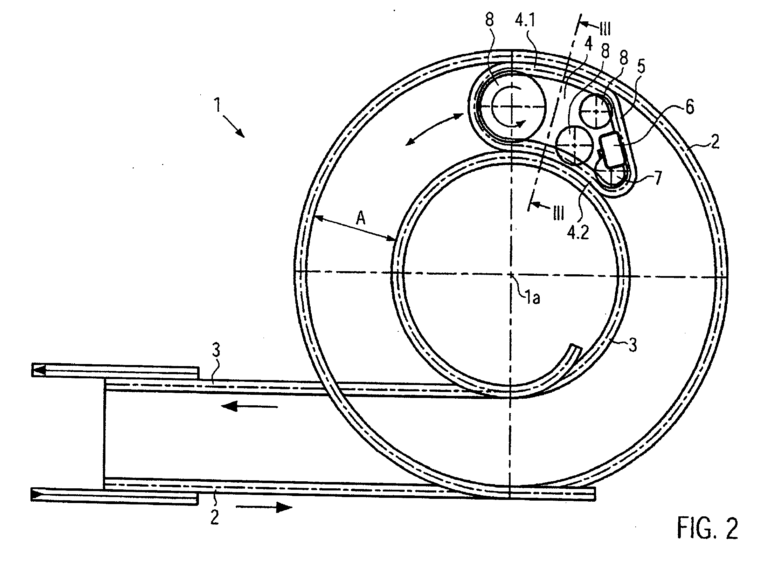

Die Fig. 1 und 2 zeigen in stark schematisierter, perspektivischer Darstellung eine Vorrichtung 1 zum Transportieren von Gegenständen. Die Vorrichtung 1 ist besonders geeignet für den Transport und die Zwischenlagerung von Getränkebehältern, wie beispielsweise Flaschen und insbesondere Kunststoffflaschen. Die Vorrichtung 1 enthält einen ersten Förderer 2 und einen zweiten Förderer 3, die im horizontalen Abstand A und parallel zueinander angeordnet und in einer spiral- , oder wie dargestellt, um eine Krümmungsachse 1a wendelförmig auf- und absteigenden Förderstrecke geführt sind. Die Vorrichtung 1 ist im dargestellten Ausführungsbeispiel als Förder-, Zwischenlager- und/oder Pufferturm ausgebildet, wobei der erste Förderer 2 als aufsteigend geführter Einlauf und der zweite Förderer 3 als abfallend geführter Auslauf ausgebildet.

Die beiden Förderer 2, 3 sind im dargestellten Ausführungsbeispiel für eine stehende Förderung von Gegenständen, wie beispielsweise Flaschen, ausgebildet und enthalten entsprechend angepasste, bandförmige Förderer mit einer Standfläche. Besonders eignen sich Förderer, die aus einer umlaufenden Kette mit einer Vielzahl miteinander über Scharniergelenke verbundenen, einzelnen Standplatten 2a, 3a bestehen, wie sie beispielsweise in der WO 2005/073113 verwendet werden. Derartige Förderer sind bekannt und müssen hier nicht näher erläutert werden.

Um die Förderstrecke zwischen dem Einlauf und dem Auslauf zu vergrößern oder zu verringern, was je nach Anzahl der zu transportierenden oder zwischenzuspeichernden Gegenstände vorgenommen wird, ist zwischen den parallel laufenden Förderern 2, 3 eine Transfereinrichtung 4, in Form eines Schlittens, vorgesehen. Die Transfereinrichtung 4 wird im Abstand A zwischen den beiden Förderern 2, 3 sowie parallel und relativ zur Bewegung der Förderer 2, 3 bewegt. Die Transfereinrichtung 4 steht dabei mit beiden Förderern 2, 3 in Übergabekontakt und enthält zu diesem Zweck einen dritten Förderer 5, der bevorzugt ebenfalls ein bandartiger, mit Standplatten 5a versehener, endlos umlaufender Förderer derjenigen Art ist, wie sie auch für den ersten und den zweiten Förderer 2, 3 eingesetzt wird.

Die Transfereinrichtung 4 trägt weiterhin einen Förderantrieb 6, in Form eines Motors, der ein Antriebsrad 7 zum Antreiben des dritten Förderers 5 dreht. Der Förderantrieb 6 wird bei der Bewegung der Transfereinrichtung 4 mitgeführt. Weiterhin sind diverse Umlenkrollen 8 vorgesehen, die dem dritten Förderer 5 eine unrunde, bevorzugt langgestreckte, Kontur verleihen, wobei er mit dem ersten Förderer 2 eine erste Übergabestrecke 4.1 und mit dem zweiten Förderer 3 eine zweite Übergabestrecke 4.2 bildet, in denen der dritte Förderer 5 parallel, in gleicher Richtung und eng benachbart zum ersten bzw. zweiten Förderer 2, 3 läuft, damit eine Übergabe stattfinden kann. Dabei ist diejenige Übergabestrecke, die im Hinblick auf die Krümmungsachse der Förderstrecke außen liegt, im dargestellten Ausführungsbeispiel die erste Übergabestrecke 4.1, kürzer als die innen liegende Übergabestrecke 4.2. Die Übergabe wird durch Führungen oder dergleichen bewerkstelligt, die im Stand der Technik bekannt sind und hier nicht nochmals erläutert werden müssen.

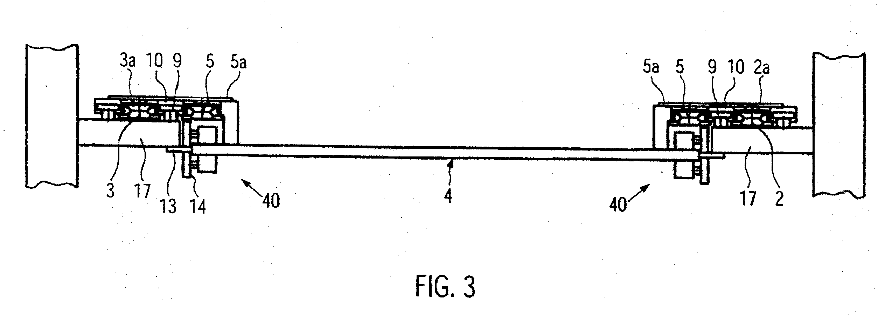

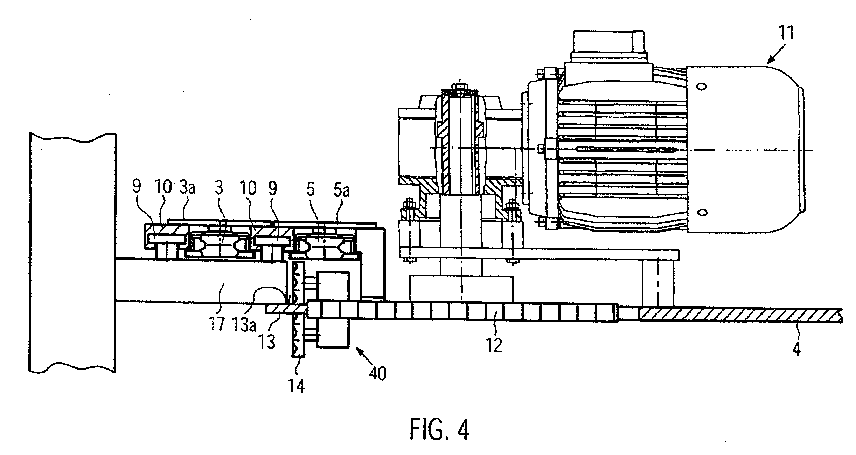

Wie Fig. 3 und die vergrößerte Darstellung in Fig. 4 zeigen, laufen die ersten, zweiten und dritten Förderer auf gleichem Niveau, d.h. sie sind mit ihren Standplatten 2a bzw. 3a bzw. 5a in Horizontalebene fluchtend nebeneinanderliegend ausgerichtet. Die Förderer 2, 3 und 5 laufen auf Unterstützungsschienen 9, die als Verschleißteil und reibungsarm ausgebildet sind. Zu diesem Zweck enthalten die Unterstützungsschienen 9 einen Reibbelag 10, der bevorzugt auswechselbar ist und die in Richtung auf die Unterseite der Platten 2a, 3a, 5a weisende Oberseite der Unterstützungsschiene 9 sowie die in Richtung auf den jeweiligen anliegenden Förderer 2 bzw. 5 oder 3 bzw. 5 weisenden Seiten der Unterstützungsschiene 9a bedeckt. Der Reibbelag 10 besteht bevorzugt aus einem geeigneten Kunststoff.

Die Unterstützungsschienen 9 sind ebenfalls gewendelt und ortsfest an einem Tragegestell 17 für den ersten und/oder den zweiten Förderer 2, 3 so angeordnet, dass sich jeweils zwei nebeneinanderliegende Förderer, d.h. der erste Förderer 2 und der dritte Förderer 5 bzw. der zweite Förderer 3 und der dritte Förderer 5 die zwischen ihnen liegende Unterstützungsschiene 9 teilen. Dies ist besonders bei wendelförmig geführten Förderern zweckmäßig, da auf diese Weise der Verschleiß vergleichmäßigt wird und leichter feststellbar ist. An den der Transfereinrichtung 4 abgewandten, außenliegenden Seiten können die gleichen Unterstützungsschienen eingesetzt werden, um die Vorratshaltung der Verschleißbeläge 10 zu vereinfachen, oder es können anders ausgebildete Schienen vorgesehen sein.

Die Transfereinrichtung 4 kann mit Hilfe eines Fahrantriebes 11 im Abstand A zwischen dem ersten und dem zweiten Förderer 2, 3 und unabhängig von der Bewegung des ersten und des zweiten Förderers 2, 3, in Richtung des Doppelpfeils hin und zurück verfahren werden. Im Ausführungsbeispiel gemäß Fig. 4 ist der Fahrantrieb 11 auf der Transfereinrichtung 4 untergebracht und wird durch die Transfereinrichtung 4 mitgenommen. Der als Motor ausgebildete Fahrantrieb 11 enthält einen Zahnradantrieb mit einem angetriebenen Zahnrad 12, das mit einer stationären Zahnleiste 13 kämmt. Die Zahnleiste 13 ist, wie Fig. 4 zeigt, am Tragegestell 17 unterhalb des Übergangs zwischen einem der Förderer, im dargestellten Ausführungsbeispiel dem zweiten Förderer 3, und der Transfereinrichtung 4, d.h. dem dritten Förderer 5 angeordnet und analog zu den Förderern gewendelt.

Die Transfereinrichtung 4 wird durch eine bevorzugt sowohl dem ersten als auch dem zweiten Förderer 2, 3 zugeordnete Abstützeinrichtung 40 gehalten, die im dargestellten Ausführungsbeispiel Laufrollen 14 und wenigstens eine Lauffläche 13a enthält, wobei als Lauffläche an der Seite des einen Förderers die Zahnleiste 13 dienen kann und dem anderen Förderer eine ähnliche Leiste zugeordnet ist. Im dargestellten Ausführungsbeispiel sind beide Leisten als Steg mit rechteckigem Querschnitt ausgebildet, wobei bei der Zahnleiste 13 eine schmale Längsseite mit der Zahnteilung und bei beiden Leisten die obere und untere Seiten als Laufflächen 13a für jeweils wenigstens eine Laufrolle 14 ausgebildet sind.

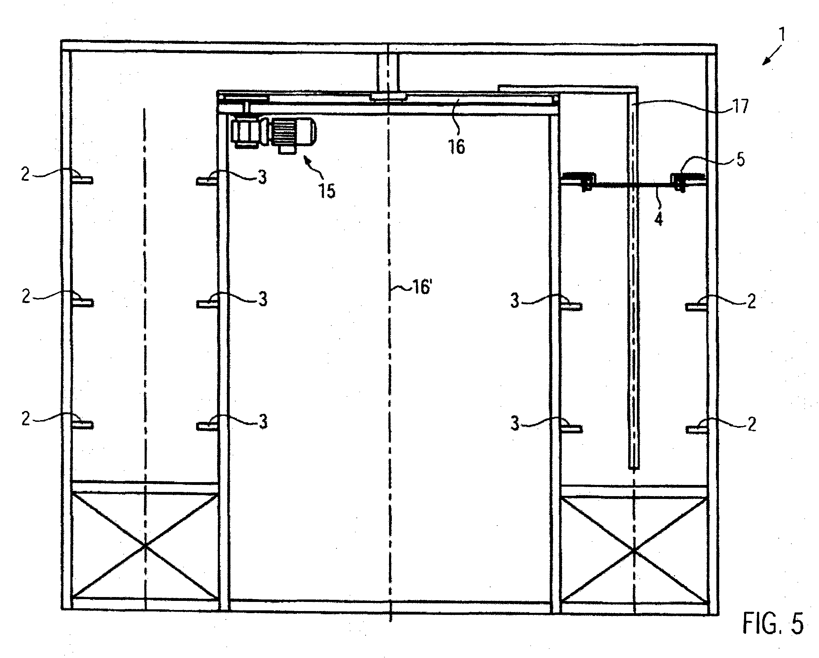

Der Antrieb der Transfereinrichtung 4 kann jedoch auch durch einen stationären Fahrantrieb 15 erfolgen, wie er beispielsweise in Fig. 5 dargestellt ist. Der in Fig. 5 dargestellte Fahrantrieb 15 enthält wiederum einen Motor, der ein Rad 16 vor und zurück um eine Achse 16' dreht, die mit der Krümmungsachse 1a der ersten und zweiten Förderer 2,3 zusammenfällt. Am Rad 16 ist ein Mitnehmer 17 in Form einer starren Stange oder Verbindungsstrebe befestigt, der bevorzugt von oben her durch die Transfereinrichtung 4 außerhalb des Bewegungsbereiches des dritten Förderers 5 ragt, beispielsweise eine als Führungsbuchse oder dgl. ausgebildete Öffnung in der Transfereinrichtung durchgreift und dadurch in der Transfereinrichtung 4 vertikal geführt ist und die Transfereinrichtung 4 in die gewünschte Richtung entlang des wendelförmigen Verfahrwegs mitnimmt, sobald das Rad 16 in die entsprechende Richtung gedreht wird. Der Mitnehmer erstreckt sich dabei über mehrere Wendelebenen der Förderer hinweg, vorzugsweise über alle.

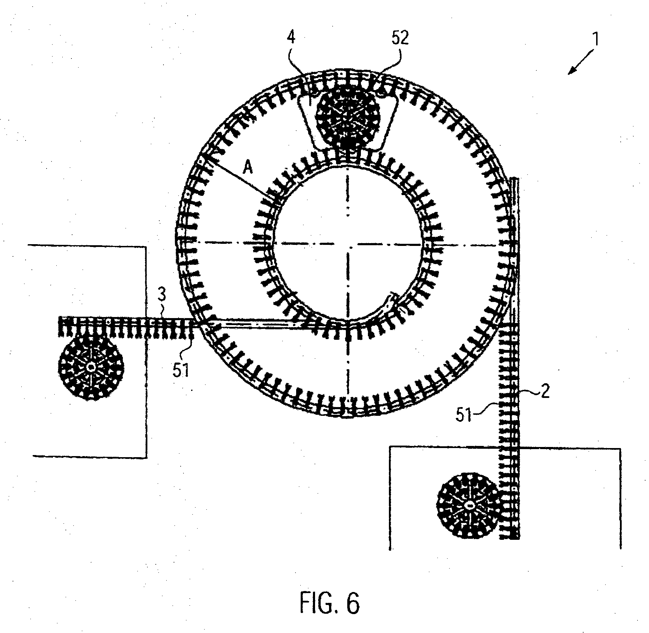

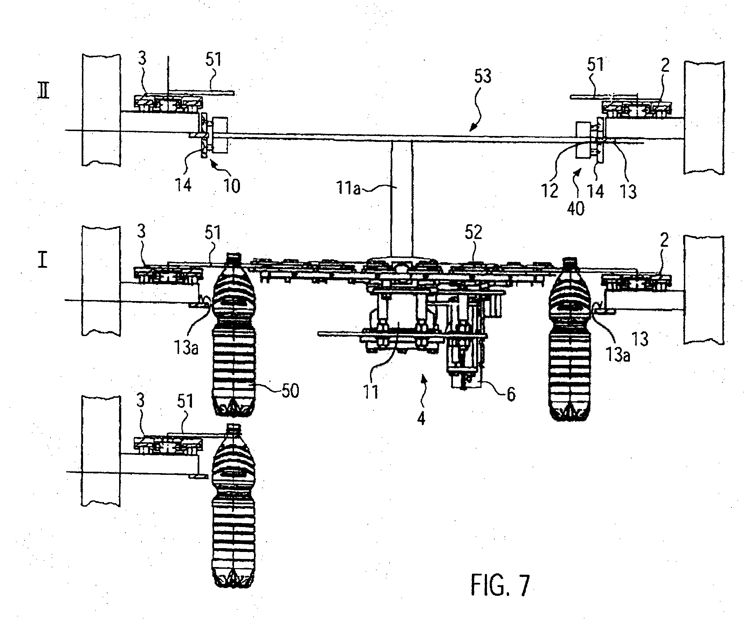

Aus den Fig. 6 und 7 ist ein weiteres Ausführungsbeispiel einer erfindungsgemäßen Vorrichtung 1 ersichtlich, wobei gleiche bzw. vergleichbare Bauteile mit den gleichen Bezugszeichen bezeichnet und nicht nochmals erläutert sind.

Die Vorrichtung 1 enthält einen ersten und einen zweiten Förderer, die hier für eine hängende Förderung von Gegenständen, dargestellt sind Flaschen 50, ausgebildet sind und entsprechende Halterungen 51 herkömmlicher Art tragen, beispielsweise Halterungen derjenigen Art, die mit gabelförmigen Enden einen zu diesem Zweck am Flaschenhals vorgesehenen Bund untergreifen oder an sich bekannte steuerbare Greiferzangen aufweisen. Die Halterungen 51 stehen derart von den Förderern 2, 3 vor, dass die Aufnahmeenden der Halterungen 51 im Bereich der wendelförmig geführten Förderstrecke in den Abstand A hineinragen.

Die Vorrichtung 1 enthält weiterhin eine Transfereinrichtung 4, die sich im Abstand A zwischen dem ersten und dem zweiten Förderer 2, 3 bewegt. Die Transfereinrichtung 4 enthält einen dritten Förderer 52, der wiederum als endlos umlaufender Förderer ausgebildet ist. Im dargestellten Ausführungsbeispiel ist der dritte Förderer 52 als Förderrad ausgebildet, an dessen Umfang die gleichen Halterungen 51 wie beim ersten und zweiten Förderer 2, 3 im Wesentlichen horizontal vorstehen. Die Teilung, d.h. der Abstand der Halterungen 51, auf den ersten und zweiten Förderern 2, 3 und dem dritten Förderer 52 sind so aufeinander abgestimmt, dass sowohl zwischen dem ersten Förderer 2 und dem dritten Förderer 52 als auch dem dritten Förderer 52 und dem zweiten Förderer 3 eine stellungsgerechte Übergabe stattfinden kann. Die Übergabe kann auf bekannte Weise erfolgen, beispielsweise indem sich die gabelförmigen Enden überschneiden, oder indem Prall- oder Leitflächen oder andere Übergabemittel vorgesehen sind.

Auf der Transfereinrichtung 4 fährt weiterhin der Förderantrieb 6 zum Antrieb des dritten Förderers 52 und der Fahrantrieb 11 zum Verfahren der Transfereinrichtung 4 entlang und relativ zum ersten und zweiten Förderer 2, 3 mit.

Die Transfereinrichtung 4 ist wiederum über eine Abstützeinrichtung 40 jeweils im Bereich des ersten und zweiten Förderers 2, 3 abgestützt, die der Abstützeinrichtung 40 der vorangegangenen Ausführungsbeispiele in konstruktiver und funktioneller Hinsicht gleicht. Die Abstützeinrichtung 40 ist jedoch an einem Ausleger 53 der Transfereinrichtung 4 angeordnet, der zum dritten Förderer 52 einen vertikalen Abstand aufweist, der an den vertikalen Abstand der Wendeln der ersten und zweiten Förderer 2, 3, angepasst ist. Der Fahrantrieb 11 ist im dargestellten Ausführungsbeispiel am dritten Förderer 52 angeordnet, über eine Motorwelle 11 a mit dem Ausleger 53 verbunden und treibt in bereits beschriebener Weise das Zahnrad 12 an, das für einen Fahrantrieb der Transfereinrichtung 4 mit der Zahnleiste 13 kämmt, die wenigstens einem der beiden stationären Förderer 2, 3 zugeordnet ist. Der Ausleger 53 trägt weiterhin die Laufrollen 14 der Abstützeinrichtung 40.

Der Ausleger 53 ist so bemessen, dass die Abstützeinrichtung 40 und der Fahrantrieb über das Zahnrad 12 und die Zahnleiste 13 einerseits und die Übergabe zwischen dem dritten und dem ersten bzw. zweiten Förderer andererseits in zwei verschiedenen Etagen I und II der wendelförmig geführten Förderstrecke stattfinden. Im dargestellten Ausführungsbeispiel liegen die beiden Etagen I und II benachbart übereinander, wobei die Übergabe auf der unteren Etage I und die Abstützung sowie der Antrieb auf der darüberliegenden Etage II stattfinden.

Um eine stellungsgenau synchronisierte Übergabe der Flaschen vom ersten Förderer 2 über den zwischengeschalteten dritten Förderer 52 zum zweiten Förderer 3 sicherzustellen, kann der dritte Förderer 52 wenigstens mit einem der beiden anderen Förderer 2 und 3 antriebsmäßig in Eingriff stehen, vorzugsweise formschlüssig über geeignete Mitnehmer, Verzahnungen oder dgl.. Wenn der dritte Förderer 52 zumindest mit einem der beiden anderen Förderer mechanisch synchronisiert ist, gestaltet sich die stellungsgenaue Steuerung des Fahrantriebs 11 zur positionsgenauen Flaschenübergabe von einer Halterung 51 eines Förderers zu der eines benachbarten Förderers problemloser, d.h. die Lageregelung des Fahrantriebs vereinfacht sich dadurch. Wird der dritte Förderer mit beiden benachbarten Förderern 2 und 3 mechanisch synchronisiert, ist ein separater motorischer Fahrantrieb ggf. entbehrlich.

In Abwandlung der beschriebenen und gezeichneten Ausführungsbeispiele kann die Erfindung auch bei anders konstruierten Förderern eingesetzt werden. Auch der Fahrantrieb der Transfereinrichtung kann auf herkömmliche Weise, beispielsweise über ein Schleppseil, erfolgen. Wird der Fahrantrieb auf der Transfereinrichtung mitgeführt, so kann er auch als Reibantrieb oder ebenfalls über ein auf- und abwickelbares Zugseil verwirklicht werden. Es ist ohne weiteres ersichtlich, dass die Unterstützungsschienen zwischen den Förderern auch zwischen benachbarten Förderern gemeinsam benutzt werden können, wenn diese bei Vorrichtungen eingesetzt werden, die zusätzlich oder alternativ zur gewundenen Förderstrecke eine geradlinige Förderstrecke aufweisen. Es ist weiterhin klar, dass eine Transfereinrichtung auch dann ihren eigenen Fahrantrieb mitführen kann, wenn die Transfereinrichtung zusätzlich oder alternativ auf einer geradlinigen Förderstrecke eingesetzt wird. Es ist weiterhin möglich, auch die in zwei Etagen wirksame Transfereinrichtung über einen Mitnehmer von einem stationären Antrieb anzutreiben, und die zweite Etage lediglich zur Abstützung der Transfereinrichtung zu nutzen.

## Patentansprüche

1. Vorrichtung (1) zum Transportieren von Gegenständen mit einem ersten Förderer (2) und einem zweiten Förderer (3), die zumindest bereichsweise parallel und im horizontalen Abstand (A) zueinander über eine wendel- oder spiralförmige Förderstrecke geführt sind, und einer mit Hilfe eines Fahrantriebs (11, 15) im Abstand (A) zwischen den Förderern (2, 3) bewegbaren Transfereinrichtung (4) zur Übergabe von Gegenständen zwischen dem ersten und zweiten Förderer (2, 3), wobei die Transfereinrichtung (4) einen dritten Förderer (5, 52) trägt, der über einen Förderantrieb (6) unabhängig vom ersten und zweiten Förderer (2, 3) antreibbar ist, wobei der erste, der zweite und der dritte Förderer jeweils aus einer umlaufenden Kette mit einer Vielzahl miteinander über Scharniergelenke verbundenen, einzelnen Standplatten (2a, 3a, 5) bestehen, und die Förderer (2, 3, 5) zumindest bereichsweise auf Unterstützungsschienen (9) und auf dem gleichen Niveau laufen, **dadurch gekennzeichnet, dass** sich der dritte Förderer (5) mit dem ersten und/oder zweiten Förderer (2, 3) eine Unterstützungsschiene (9) teilt.

2. Vorrichtung nach Anspruch 1, **dadurch gekennzeichnet, dass** der dritte Förderer (5, 52) ein endlos umlaufender Förderer ist.

3. Vorrichtung nach Anspruch 1 oder 2, **dadurch gekennzeichnet, dass** der Förderantrieb (6) für den dritten Förderer (5, 52) auf der Transfereinrichtung (4) mitgeführt wird.

4. Vorrichtung nach einem der Ansprüche 1 bis 3, **dadurch gekennzeichnet, dass** die Transfereinrichtung (4) eine Abstützeinrichtung (40) mit auf einer Lauffläche (13a) abgestützten Laufrollen (14) aufweist.

5. Vorrichtung nach Anspruch 1, **dadurch gekennzeichnet, dass** die Unterstützungsschiene (9) eine reibungsvermindernd und als Verschleißteil ausgebildete Lauffläche (10) aufweist.

6. Vorrichtung nach einem der Ansprüche 1 bis 5, **dadurch gekennzeichnet, dass** der Fahrantrieb (11) für eine Bewegung der Transfereinrichtung (4) entlang der ersten und zweiten Förderer (2, 3) auf der Transfereinrichtung (4) mitgeführt wird.

7. Vorrichtung nach einem der Ansprüche 1 bis 6, **dadurch gekennzeichnet, dass** der Fahrantrieb (11) einen mit einer stationären Zahnleiste (13) zusammenwirkenden Zahnradantrieb (12) aufweist.

8. Vorrichtung nach einem der Ansprüche 1 bis 5, **dadurch gekennzeichnet, dass** die Transfereinrichtung (4) durch einen stationären Fahrantrieb (15) angetrieben wird.

9. Vorrichtung nach Anspruch 8, **dadurch gekennzeichnet, dass** der stationäre Fahrantrieb (15) einen mit der Transfereinrichtung (4) verbundenen Mitnehmer (17) bewegt.

10. Vorrichtung nach einem der Ansprüche 1 bis 9, **dadurch gekennzeichnet, dass** die Transfereinrichtung (4) über zwei Etagen (I, II) der wendelförmigen Förderstrecke reicht, wobei der dritte Förderer (52) in der einen und eine Abstützeinrichtung (40) in der anderen Etage wirksam ist.

11. Vorrichtung nach einem der Ansprüche 1 bis 10, **dadurch gekennzeichnet, dass** der dritte Förderer (5) eine in Draufsicht unrunde Kontur mit einer ersten Übergabestrecke (4.1), die parallel zum ersten Förderer (2) verläuft, und einer zweiten Übergabestrecke (4.2), die parallel zum zweiten Förderer (3) verläuft, aufweist.

12. Vorrichtung nach Anspruch 11, **dadurch gekennzeichnet, dass** die Übergabestrecke (4.1), die parallel zum im Hinblick auf die wendel- oder spiralförmige Förderstrecke außen liegenden Förderer (2) verläuft, kürzer als die innen liegende Übergabestrecke (4.2) ist.

13. Vorrichtung nach einem der Ansprüche 1 bis 10, **dadurch gekennzeichnet, dass** der dritte Förderer (52) einen Förderstern oder ein Förderrad aufweist.

14. Vorrichtung nach einem der Ansprüche 1 bis 13, **dadurch gekennzeichnet, dass** der dritte Förderer (5) eine Förderkette mit Standflächen (5a) für eine stehende Förderung der Gegenstände aufweist.

15. Vorrichtung nach einem der Ansprüche 1 bis 13, **dadurch gekennzeichnet, dass** der dritte Förderer (52) Halterungen (51) für eine hängende Förderung der Gegenstände (50) aufweist.

16. Vorrichtung nach wenigstens einem der vorhergehenden Ansprüche, **dadurch gekennzeichnet, dass** ein stabförmiger, entlang der wendelförmigen Förderstrecke bewegbarer Mitnehmer (17) zum Verfahren des dritten Förderers (52) vorgesehen ist, der sich über mehrere Wendelebenen erstreckt und vorzugsweise von einem stationär angeordneten Antrieb positionierbar ist.

## Claims

1. Device (1) for transporting objects with a first conveyor (2) and a second conveyor (3), which at least area by area are placed parallel and at a horizontal distance (A) across a coil or spiral-shaped conveyor line, and a transfer device (4) which can be moved with the help of a drive (11, 15) in the space (A) between the conveyors (2, 3) to pass the objects between the first and second conveyors (2, 3), wherein the transfer device (4) carries a third conveyor (5, 52) which can be driven independently of the first and second conveyors (2, 3) using a conveyor drive (6), wherein the first, the second and the third conveyors each comprise a circulating chain having a plurality of individual base plates (2a, 3a, 5) interconnected by hinge joints, and wherein the conveyors (2, 3, 5) at least area by area run on support rails (9) on the same level, **characterised in that** the third conveyor (5) shares a support rail (9) with the first and / or second conveyors (2, 3).

2. Device according to Claim 1, **characterised in that** the third conveyor (5, 52) is a continuously circulating conveyor.

3. Device according to Claim 1 or 2, **characterised in that** the conveyor drive (6) for the third conveyor (5, 52) is carried along on the transfer device (4).

4. Device according to one of Claims 1 to 3, **characterised in that** the transfer device (4) has a support device (40) with cam rollers (14) which are supported on a running surface (13a).

5. Device according to Claim 1, **characterised in that** the support rail (9) has a friction-minimising running surface (10) designed to act as a wearing part.

6. Device according to one of Claims 1 to 5, **characterised in that** the drive (11) for moving the transfer device (4) is carried along the first and second conveyors (2, 3) on the transfer device.

7. Device according to one of Claims 1 to 6, **characterised in that** the drive (11) has a gear drive (12) which works together with a stationary toothed strip (13).

8. Device according to one of Claims 1 to 5, **characterised in that** the transfer device (4) is driven by a stationary drive (15).

9. Device according to Claim 8, **characterised in that** the stationary drive (15) moves a catch (17) which is connected to the transfer device (4).

10. Device according to one of Claims 1 to 9, **characterised in that** the transfer device (4) extends across two levels (I, II) of coil-shaped conveyor line, wherein the third conveyor (52) has effect in one level and a support device (40) has effect in the other level.

11. Device according to one of Claims 1 to 10, **characterised in that** the third conveyor (5) has an outline which is uneven in top view with a first delivery line (4.1) running parallel to the first conveyor (2) and a second delivery line (4.2) running parallel to the second conveyor (3).

12. Device according to Claim 11, **characterised in that** the delivery line (4.1), which runs parallel to the conveyor (2) on the exterior of the coil or spiral-shaped conveyor line, is shorter than the inner delivery line (4.2).

13. Device according to one of Claims 1 to 10, **characterised in that** the third conveyor (52) has a star configuration conveyor or a driving gear.

14. Device according to one of Claims 1 to 13, **characterised in that** the third conveyor (5) has a conveyor chain with floor space (5a) for upright conveying of objects.

15. Device according to one of Claims 1 to 13, **characterised in that** the third conveyor (52) has brackets (51) for hanging conveying of objects (50).

16. Device according to at least one of the previous claims, **characterised in that** a rod-shaped catch (17) which can be moved along the coil-shaped conveyor line is provided for the movement of the third conveyor (52) which extends across several coil levels and preferably can be positioned using a stationary arranged drive.

## Revendications

1. Dispositif (1) pour le transport d'objets, comprenant un premier transporteur (2) et un deuxième transporteur (3), qui, au moins par zones, sont guidés parallèlement l'un à l'autre et à distance horizontale (A) l'un de l'autre, le long d'un trajet de transport en forme d'hélice ou de spirale, et comprenant également un ensemble de transfert (4), qui est mobile au moyen d'un entraînement de déplacement (11, 15), dans l'espace de la distance (A) entre les transporteurs (2, 3), et est destiné à transférer des objets entre le premier et le deuxième transporteur (2, 3), dispositif
dans lequel l'ensemble de transfert (4) porte un troisième transporteur (5, 52), qui peut être entraîné indépendamment du premier et du deuxième transporteur (2, 3) par l'intermédiaire d'un entraînement de transport (6),
dans lequel le premier, le deuxième et le troisième transporteurs sont formés chacun par une chaîne en révolution comprenant un grand nombre de plaques d'appui (2a, 3a, 5) individuelles reliées mutuellement par l'intermédiaire d'articulations à charnière, et les transporteurs (2, 3, 5) circulent, au moins par zones, sur des rails de support (9) et au même niveau,
**caractérisé en ce que** le troisième transporteur (5) se partage un rail de support (9) avec le premier et/ou le deuxième transporteur (2, 3).

2. Dispositif selon la revendication 1, **caractérisé en ce que** le troisième transporteur (5, 52) est un transporteur en révolution sans fin.

3. Dispositif selon la revendication 1 ou la revendication 2, **caractérisé en ce que** l'entraînement de transport (6) pour le troisième transporteur (5, 52) est embarqué sur l'ensemble de transfert (4).

4. Dispositif selon l'une des revendications 1 à 3, **caractérisé en ce que** l'ensemble de transfert (4) présente un système d'appui (40) comprenant des galets de circulation (14) s'appuyant sur une surface de circulation (13a).

5. Dispositif selon la revendication 1, **caractérisé en ce que** le rail de support (9) présente une surface de circulation (10) d'une conception réduisant le frottement et réalisée en tant que pièce d'usure.

6. Dispositif selon l'une des revendications 1 à 5, **caractérisé en ce que** l'entraînement de déplacement (11) pour un mouvement de l'ensemble de transfert (4) le long du premier et du deuxième transporteur (2, 3), est embarqué sur l'ensemble de transfert (4).

7. Dispositif selon l'une des revendications 1 à 6, **caractérisé en ce que** l'entraînement de déplacement (11) présente un entraînement à roue dentée (12) coopérant avec une crémaillère ou barre dentée (13) stationnaire.

8. Dispositif selon l'une des revendications 1 à 5, **caractérisé en ce que** l'ensemble de transfert (4) est entraîné par un entraînement de déplacement (15) stationnaire.

9. Dispositif selon la revendication 8, **caractérisé en ce que** l'entraînement de déplacement (15) stationnaire déplace un entraîneur (17) relié à l'ensemble de transfert (4).

10. Dispositif selon l'une des revendications 1 à 9, **caractérisé en ce que** l'ensemble de transfert (4) s'étend sur deux étages (I, II) du trajet de transport en forme d'hélice, le troisième transporteur (52) étant actif dans l'un des étages et le système d'appui (40) dans l'autre étage.

11. Dispositif selon l'une des revendications 1 à 10, **caractérisé en ce que** le troisième transporteur (5) présente, en vue de dessus, un contour non circulaire comportant un premier trajet de transfert (4.1), qui s'étend parallèlement au premier transporteur (2), et un deuxième trajet de transfert (4.2), qui s'étend parallèlement au deuxième transporteur (3).

12. Dispositif selon la revendication 11, **caractérisé en ce que** le trajet de transfert (4.1), qui s'étend parallèlement au transporteur (2) situé à l'extérieur en se référant au trajet de transport en forme d'hélice ou de spirale, est plus court que le trajet de transfert (4.2) situé à l'intérieur.

13. Dispositif selon l'une des revendications 1 à 10, **caractérisé en ce que** le troisième transporteur (52) comprend une étoile de transport ou une roue de transport.

14. Dispositif selon l'une des revendications 1 à 13, **caractérisé en ce que** le troisième transporteur (5) comprend une chaine de transport avec des surfaces d'appui (5a) pour un transport des objets en position debout.

15. Dispositif selon l'une des revendications 1 à 13, **caractérisé en ce que** le troisième transporteur (52) comprend des supports de maintien (51) pour un transport suspendu des objets (50).

16. Dispositif selon l'une au moins des revendications précédentes, **caractérisé en ce qu'**il est prévu un entraîneur (17) en forme de barre, pouvant être déplacé le long du trajet de transport en forme d'hélice et destiné à déplacer le troisième transporteur (52), ledit entraîneur s'étendant sur plusieurs plans de spires de l'hélice et pouvant de préférence être positionné par un entraînement agencé de manière stationnaire.
